(19) Europäisches Patentamt
European Patent Office
Office européen des brevets

(11) **EP 0 532 932 B1**

(12) **EUROPÄISCHE PATENTSCHRIFT**

(45) Veröffentlichungstag und Bekanntmachung des Hinweises auf die Patenterteilung:
**16.07.1997 Patentblatt 1997/29**

(51) Int Cl.⁶: **G01N 27/413**

(21) Anmeldenummer: **92114202.2**

(22) Anmeldetag: **20.08.1992**

(54) **Elektrochemische Messzelle zum Nachweis und zur Bestimmung von Gasen und Dämpfen, insbesondere von Halogen-Wasserstoffen**

Electrochemical measuring cell for detecting and determining gases and vapors, in particular of halogen hydracides

Cellule de mesure électrochimique pour la détection et la détermination de gaz et de vapeurs, en particulier d'hydracides halogénés

(84) Benannte Vertragsstaaten:
**DE FR GB NL**

(30) Priorität: **14.09.1991 DE 4130690**
**12.10.1991 DE 4133831**

(43) Veröffentlichungstag der Anmeldung:
**24.03.1993 Patentblatt 1993/12**

(73) Patentinhaber: **Drägerwerk Aktiengesellschaft**
**D-23542 Lübeck (DE)**

(72) Erfinder:
• **Kühn, Uwe**
**W-2067 Wesenberg (DE)**
• **Kiesele, Herbert, Dr.**
**W-2400 Lübeck (DE)**
• **Haupt, Stefan, Dr.**
**W-2400 Lübeck (DE)**

(56) Entgegenhaltungen:
**EP-A- 0 293 230       EP-A- 0 436 148**
**DE-A- 2 627 271       DE-A- 3 923 717**
**FR-A- 2 532 054       US-A- 3 795 589**

• **IEEE TRANSACTIONS ON ELECTRON DEVICES, Bd.35, Nr.6, Juni 1988, NEW YORK US Seiten 793 - 799 G. J. MACLAY ET AL.**

**Beschreibung**

Die Erfindung betrifft eine elektrochemische Meßzelle zum Nachweis und zur Bestimmung von gasförmigen und dampfförmigen Bestandteilen in einer Meßprobe, mittels einer Meßelektrode und einer Gegenelektrode, die sich in einem Elektrolyten mit einem die elektrochemische Reaktion fördernden Zusatz befinden und welche in einer Meßkammer aufgenommen sind, die zur Umgebung hin mit einer für die nachzuweisende Substanz durchlässigen, für den Elektrolyten und den Zusatz undurchlässigen Membran abgeschlossen ist.

Eine derartige elektrochemische Meßzelle ist in der DE-OS 26 27 271 beschrieben worden.

Die bekannte elektrochemische Meßzelle besitzt eine ionenselektive Meßelektrode und Gegenelektrode aus Silber, welche in einem Elekrolyten aus Schwefelsäure und einem Silbersulfat als Zusatz eintauchen. Beim Nachweis von beispielsweise Salzsäure reagieren die im Elektrolyten gelösten Chloridionen mit den Silberionen und bilden einen Silberchloridniederschlag zwischen Meßelektrode und Membran. Dies führt im Laufe des Meßvorgangs zu einer Veränderung bzw. Blockierung der Diffusionswege, was eine unerwünschte Verfälschung des Meßergebnisses zur Folge hat. Diese Meßzelle ermöglicht somit durch den Zusatz zwar die Detektion, jedoch wird die Elektrode blockiert.

Bei einer weiteren bekannten Meßzelle nach der DE-OS 39 23 717 gelangt die Gasprobe an die der Umgebung ausgesetzten semipermeablen Membran, worauf der nachzuweisende Bestandteil durch die Membran diffundiert und in dem Elektrolyten gelöst wird. Die elektrochemische Reaktion findet an der Grenzfläche Elektrolyt/Meßelektroden-Oberfläche statt. Das resultierende Meßsignal, welches zwischen Meßelektrode und Gegenelektrode abgegriffen wird, ist ein Maß für die Konzentration des nachzuweisenden Bestandteils. Ein Zusatz an Kupfersalz soll die Oxidation der nachzuweisenden Substanz (Blausäure, Schwefeldioxid) katalysieren. Dieser Zusatz fördert zwar die Reaktion, aktiviert aber nicht die Elektrode.

Der vorliegenden Erfindung liegt somit die Aufgabe zugrunde, eine elektrochemische Meßzelle der genannten Art so zu verbessern, daß sie selektiv hochempfindlich anspricht und ein stabiles Meßsignal mit geringer Querempfindlichkeit gegenüber anderen Bestandteilen, wie z.B. Wasserstoff, in der das nachzuweisende Gas enthaltenden Meßprobe abgibt. Die Elektrodenoberfläche, insbesondere die der Meßelektrode, soll während der gesamten Meßzeit in ihrer Meßaktivität nicht beeinträchtigt werden.

Zur Lösung der Aufgabe ist vorgesehen, daß der Zusatz im Elektrolyten gelöste Metallionen $M^{n+}$ des gleichen Metalls $M^o$ enthält, aus dem die Meßelektrode in ihrem Hauptbestandteil zusammengesetzt ist, und daß die Oxidationsstufe n größer oder gleich dem Zahlenwert 2 ist und mit einem solchen Wert n vorliegt, daß eine Synproportionierungsreaktion zwischen dem Metall $M^o$ der Meßelektrode und dem gelösten Metallion $M^{n+}$ stattfindet.

Je nach gewähltem Metall für die Meßelektrode ist ein solcher Zusatz auszuwählen, daß dasselbe Metall - als Salz vorliegend oder in einem Komplex gebunden - in einer solchen höherwertigen Oxidationsstufe (n größer gleich 2) im Elektrolyten gelöst vorliegt, daß eine Synproportionierungsreaktion zwischen dem Metall der Elektrode und dem gelösten Metallion stattfindet. Die Synproportionierungsreaktion läuft üblicherweise über mehrere Einzelschritte ab, in denen der notwendige Elektronentransfer zwischen $M^o$ und $M^{n+}$ stattfindet. Besteht z.B. die Meßelektrode aus Kupfer, ist als Zusatz Kupfer(II)chlorid zu wählen (n = 2). Bei Platin als Elektrodenmaterial wäre als Zusatz Hexachloroplatinat mit einer Oxidationsstufe n = 4 einzusetzen.

Die ablaufende Synproportionierungsreaktion zwischen dem neutralen Metallion $M^o$ der Meßelektrode und dem mehrfach geladenen Metallion in Lösung bewirkt gewissermaßen eine Anätzung bzw. ein immerwährendes Freilegen der Meßelektrodenoberfläche von irgendwelchen, die Reaktion an der Elektrodenoberfläche behindernden Ablagerungen oder Veränderungen; eine metallisch reine Oberfläche steht ständig zur Verfügung. Dadurch ist deren Meßaktivität erhöht, was sich in einem verbesserten Ansprechverhalten äußert. Der Zusatz im Elektrolyten fördert nunmehr die Reaktion, und verhindert dazu ein Blockieren der Elektrode.

Die Meßelektrode kann dabei entweder aus reinem Metall oder aus einer metallischen Legierung bestehen, wobei der Hauptbestandteil der Legierung als an der Syproportionierungsreaktion teilnehmender Partner anzusehen ist.

Soll mit der Meßzelle Halogenwasserstoff nachgewiesen werden, besteht die Meßelektrode vorzugsweise aus Gold, und der Zusatz ist ein Salz der allgemeinen Form $HAuX_4$ oder $AuX_3$, wobei X eines der Elemente Cl oder Br ist, und dessen Konzentration größer als $10^{-5}M$, vorzugsweise $10^{-3}M$ ist.

Die Auswahl von Cl für X ist günstig für den Nachweis von HCl, HBr, HJ, die Auswahl von Br für X begünstigt den Nachweis von HBr, HJ. Für die Bestimmung von HCl hat sich als besonders geeignet die Tetrachlorogoldsäure ($HAuCl_4$) erwiesen. Für diese gilt n = 3.

Eine derartige elektrochemische Meßzelle findet u. a. ihren Anwendungsbereich in der chemischen Industrie sowie in der Halbleiterindustrie, in welcher gasförmige Bestandteile wie Salzsäure oder Bromwasserstoff bzw. solche Verbindungen, die an feuchter Luft HCl entwickeln, wie z. B. $BCl_3$, $BBr_3$, $SiH_2Cl_2$ und $SiCl_4$ als Schadstoffe für die in der Halbleiterindustrie Beschäftigten in deren Arbeitsumgebung nachgewiesen werden müssen. Der Sensor zeichnet sich durch Langzeitstabilität und hohe Ansprechgeschwindigkeit aus, da durch die stattfindenden Elektrodenreaktionen die Oberfläche der Meßelektrode stets aktiviert bleibt und ihre Empfindlichkeit auch bei langanhaltender Belastung der Meßzelle mit dem nachzuweisenden Gasbestandteil nicht merklich nachläßt.

Die an der Meßelektrode ablaufenden Reaktionsschritte während der Messung von Halogenwasserstoffen wird am Beispiel des Nachweises von Salzsäure und Tetrachlorogoldsäure als Zusatz in folgenden Einzelreaktionsschritten dargestellt:

$$(1) \qquad Au <\!-\!> Au^+ + e^-$$

$$(2) \qquad Au <\!-\!> Au^{3+} + 3e^-$$

$$(3) \qquad 2\,Au + Au^{3+} <\!-\!> 3\,Au^+$$

$$(4) \qquad Au^+ + 2\,Cl^- <\!-\!> [AuCl_2]^-$$

$$(5) \qquad Au^{3+} + 4\,Cl^- <\!-\!> [AuCl_4]^-$$

Die im Elektrolyten gelöste Tetrachlorogoldsäure ist im Gleichgewicht mit den $Au^{3+}$-Ionen entsprechend den Gleichungen (2) und (3), welches bei Anwesenheit von beispielsweise Salzsäure gestört wird, indem die in diesem Falle betrachtete Nachweis-Spezies $Cl^-$ dieses Gleichgewicht entsprechend der Nachweisreaktionen (4) und (5) stört. Die Chloridionen reagieren sowohl mit den auf der festen Goldelektroden-Oberfläche befindlichen $Au^+$-Ionen als auch mit denen in Lösung befindlichen $Au^{3+}$-Ionen. Die an der Elektroden-Oberfläche durch die Reaktion nach Gleichung (4) und (5) entfernten $Au^+/Au^{3+}$-Ionen werden durch die Auflösung der Elektrode nachgeliefert. Dadurch wird die Elektroden-Oberfläche stets erneuert und somit aktiviert. Der Goldvorrat reicht für einen mehr als einjährigen Dauerbetrieb der Meßzelle aus.

Durch den Zusatz an Tetrachlorogoldsäure wird während der Nachweisreaktion somit die Meßelektroden-Oberfläche ständig erneuert; die Meßzelle spricht selektiv auf Halogen-Wasserstoff an, und wegen der gleichbleibend aktiven Meßelektroden-Oberfläche ist die Ansprechgeschwindigkeit hoch und das Meßsignal bleibt stabil.

Eine geeignete Elektrolyt-Zusammensetzung für die Messung von HCl besteht darin, in einer 4-molaren Schwefelsäure einen Zusatz von $10^{-1}$ bis $10^{-5}$ molarer, vorzugsweise $10^{-3}$ molarer, Tetrachlorogoldsäure vorzusehen. Diese Zusammensetzung ermöglicht eine kontinuierliche Messung zum Nachweis von Halogen-Wasserstoffen im ppm-Bereich.

Zur weiteren Langzeitstabilisierung des Meßsignales ist es zweckmäßig, in der elektrochemischen Meßzelle eine zusätzliche Referenzelektrode aus demselben Material wie das der Meßelektrode einzubringen. Mit Hilfe dieser dritten Elektrode ist es möglich, das Bezugspotential zur Arbeitselektrode mit Hilfe einer potentiostatischen Schaltung festzulegen. Wegen des identischen Elektrodenmaterials ist ein Elektrodenpotential von 0 Volt möglich, welches sich in einer kurzen Einlaufzeit und einem geringen Grundstrom äußert. Damit sind die Voraussetzungen für einen schnell einsatzbereiten und hochempfindlichen Sensor geschaffen.

Während der Nachweisreaktion von z.B. Salzsäure findet unter anderem bei der Reduktion des Zusatzes (im Beispiel von Tetrachlorogoldsäure) an der Gegenelektrode eine Anreicherung von Halogen-Wasserstoff (im Beispiel Salzsäure) im Elektrolyten statt. Diese Anreicherung führt zur Verschiebung des Bezugspotentials für die Meßelektrode, was zu einer Drift des Meßsignals führt. Um diese unerwünschten Folgereaktionen zu unterbinden, ist es zweckmäßig, die Gegenelektrode mit einer Kationentauschermembran zu schützen. Dadurch wird die Reduktion des Zusatzes, z.B. der Tetrachlorogoldsäure verhindert, so daß es zur Anreicherung des Zusatzes, und nicht mehr zu einer Anreicherung von Halogen-Wasserstoff in der Lösung kommt.

Die Anbringung der Ionentauschermembran kann entweder in der Art erfolgen, daß sie innerhalb des Elektrolytraums als eine Barriere zwischen Meßelektrode und Gegenelektrode in das Gehäuse eingespannt ist, oder die Oberfläche der Gegenelektrode ist mit der Ionentauschermembran überspannt.

Ein geeignetes Material für die Ionentauschermembran ist ein perfluorosulfoniertes PTFE (Nafion, Warenzeichen der Fa. Dupont).

Ein Ausführungsbeispiel der Erfindung wird anhand einer schematischen Zeichnung dargestellt und im folgenden näher erläutert.

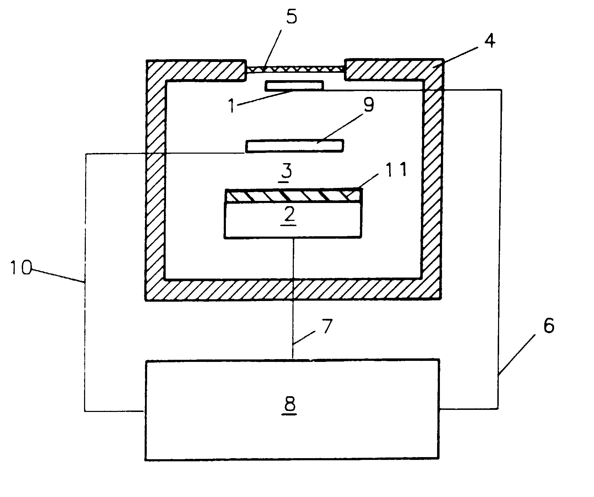

Die einzige Figur zeigt eine Meßzelle mit einer Meßelektrode (1), einer Gegenelektrode (2) und einer Bezugselektrode (9), alle aus Gold, welche in einem Elektrolytraum (3) des Meßzellengehäuses (4) eingebracht sind. Der Elektrolytraum (3) ist mit einer wäßrigen Lösung von 4-molarer Schwefelsäure mit einem Zusatz von $10^{-3}$ molarer Tetrachlorogoldsäure gefüllt. Zur Umgebung hin, die die Meßprobe mit Halogen-Wasserstoff enthält, ist der Elektrolytraum (3) durch eine für Halogen-Wasserstoff permeablen Membran (5) abgeschlossen. Die Gegenelektrode (2) ist mit einem Überzug aus einer Ionentauschermembran (11) überspannt. Alle Elektroden (1, 2, 9) besitzen Meßanschlüsse (6, 7, 10), welche durch das Gehäuse (4) hindurchgeführt und an eine Auswerteeinheit (8) zur weiteren Verarbeitung der Meßsignale angeschlossen sind. Die Auswerteeinheit (8) enthält ebenfalls einen Potentiostaten, mit dessen Hilfe das Bezugspotential zwischen Referenzelektrode (9) und Meßelektrode (1) festgelegt und aufrechterhalten wird.

**Patentansprüche**

1.  Elektrochemische Meßzelle zum Nachweis und zur Bestimmung von gas- oder dampfförmigen Bestandteilen in einer Meßprobe, mittels einer Meßelektrode und einer Gegenelektrode, die sich in einem Elektrolyten mit einem die elektrochemische Reaktion fördernden Zusatz befinden und welche in einer Meßkammer aufgenommen sind, die zur Umgebung hin mit einer für die nachzuweisende Substanz durchlässigen, für den Elektrolyten und den Zusatz undurchlässigen Membran abgeschlossen ist, dadurch gekennzeichnet, daß der Zusatz im Elektrolyten gelöste Metallionen $M^{n+}$ des gleichen Metalls $M^o$ enthält, aus dem die Meßelektrode (1) in ihrem Hauptbestandteil zusammengesetzt ist, und daß die Oxidationsstufe n größer oder gleich dem Zahlenwert 2 ist und mit einem solchen Wert n vorliegt, daß eine Synproportionierungsreaktion zwischen dem Metall $M^o$ der Meßelektrode (1) und dem gelösten Metallion $M^{n+}$ stattfindet.

2. Elektrochemische Meßzelle nach Anspruch 1, dadurch gekennzeichnet, daß die Meßelektrode (1) zum Nachweis von Halogenwasserstoffen im wesentlichen aus Gold besteht, und daß der Zusatz das Metallion in gelöster Form eines Salzes der allgemeinen Zusammensetzung $HAuX_4$ oder $AuX_3$ enthält, wobei X eines der Elemente Cl oder Br darstellt.

3. Elektrochemische Meßzelle nach Anspruch 2, dadurch gekennzeichnet, daß der Zusatz im Elektrolyten in einer Konzentration größer als $10^{-5}M$, vorzugsweise $10^{-3}M$ vorliegt.

4. Elektrochemische Meßzelle nach Anspruch 1 bis 3, dadurch gekennzeichnet, daß zum Nachweis von Salzsäure dem Elektrolyten ein Zusatz an Tetrachlorogoldsäure ($HAuCl_4$) beigegeben ist.

5. Elektrochemische Meßzelle nach einem der Ansprüche 1 bis 4, dadurch gekennzeichnet, daß eine zusätzliche Referenzelektrode (9) aus demselben Metall wie die Meßelektrode (1) vorgesehen ist.

6. Elektrochemische Meßzelle nach einem der Ansprüche 1 bis 5, dadurch gekennzeichnet, daß die Gegenelektrode (2) mit einer Kationentauschermembran (11) geschützt ist.

7. Elektrochemische Meßzelle nach Anspruch 6, dadurch gekennzeichnet, daß die Ionentauschermembran (11) aus Nafion (perfluorosulfoniertes PTFE) besteht.

8. Elektrochemische Meßzelle nach Anspruch 6 oder 7, dadurch gekennzeichnet, daß die Ionentauschermembran als eine zwischen Meßelektrode (1) und Gegenelektrode (2) im Elektrolytraum (3) eingebrachte Trennmembran (11) im Gehäuse (4) eingespannt ist.

9. Elektrochemische Meßzelle nach Anspruch 6 oder 7, dadurch gekennzeichnet, daß die Ionentauschermembran (11) die Oberfläche der Gegenelektrode (2) überdeckt.

## Claims

1. Electrochemical measurement cell for detecting and determining gaseous or vaporous components in a measurement sample, by means of a measurement electrode and a counter electrode which are located in an electrolyte with an additive promoting the electrochemical reaction and which are held in a measurement chamber which is sealed to the outside with a membrane which is permeable to the substance to be detected and non-permeable to the electrolyte and the additive, characterised in that the additive contains metal ions $M^{n+}$, dissolved in the electrolyte, of the same metal $M°$ as the main component of the measurement electrode (1) is composed, and in that the oxidation state n is greater than, or equal to, the numerical value 2 and has such a value n that disproportion takes place between the metal $M°$ of the measurement electrode (1) and the dissolved metal ion $M^{n+}$.

2. Electrochemical measurement cell according to claim 1, characterised in that the measurement electrode (1) consists substantially of gold in order to detect hydrogen halides, and in that the additive contains the metal ion in the dissolved form of a salt of the general composition $HAuX_4$ or $AuX_3$, where X is one of the elements Cl or Br.

3. Electrochemical measurement cell according to claim 2, characterised in that the additive in the electrolyte is present in a concentration greater than $10^{-5}M$, preferably $10^{-3}M$.

4. Electrochemical measurement cell according to claim 1 to 3, characterised in that an additive of tetrachloroauric acid ($HAUCl_4$) is added to the electrolyte to detect hydrochloric acid.

5. Electrochemical measurement cell according to one of claims 1 to 4, characterised in that an additional reference electrode (9) of the same metal as the measurement electrode (1) is provided.

6. Electrochemical measurement cell according to one of claims 1 to 5, characterised in that the counter electrode (2) is protected with a cation exchanger membrane (11).

7. Electrochemical measurement cell according to claim 6, characterised in that the ion exchanger membrane (11) is made of nafion (perfluorosulphonated PTFE).

8. Electrochemical measurement cell according to claim 6 or 7, characterised in that the ion exchanger membrane is extended in the housing (4) as a dividing membrane (11) introduced in the electrolyte chamber (3) between the measurement electrode (1) and the counter electrode (2).

9. Electrochemical measurement cell according to claim 6 or 7, characterised in that the ion exchanger membrane (11) covers the surface of the counter electrode (2).

**Revendications**

1. Cellule de mesure électrochimique destinée à déceler et à déterminer des constituants gazeux ou sous forme de vapeur dans un échantillon de mesure, au moyen d'une électrode de mesure et d'une contre-électrode, qui se trouvent dans un électrolyte avec un additif favorisant la réaction électrochimique et sont logées dans une chambre de mesure, laquelle est fermée vers le milieu ambiant au moyen d'une membrane perméable à la substance à déceler et imperméable à l'électrolyte et à l'additif, caractérisée en ce que l'additif dans l'électrolyte contient des ions métalliques $M^{n+}$ dissous du même métal $M^o$ que celui dont est composée l'électrode de mesure (1) dans son constituant principal, et en ce que le nombre d'oxydation n est supérieur ou égal à la valeur numérique 2 et se trouve avec une valeur n telle qu'une réaction de synproportionnalisation a lieu entre le métal $M^o$ de l'électrode de mesure (1) et l'ion métallique $Mn+$ dissous.

2. Cellule de mesure électrochimique selon la revendication 1, caractérisée en ce que l'électrode de mesure (1) pour déceler des hydracides halogénés est essentiellement en or, et en ce que l'additif contient l'ion métallique sous forme dissoute d'un sel de composition générale $HAuX_4$ ou $AuX_3$, X représentant l'un des éléments Cl ou Br.

3. Cellule de mesure électrochimique selon la revendication 2, caractérisée en ce que l'additif se trouve dans l'électrolyte dans une concentration supérieure à $10^{-5}M$, de préférence $10^{-3}M$.

4. Cellule de mesure électrochimique selon les revendications 1 à 3, caractérisée en ce que pour déceler de l'acide chlorydrique il est ajouté à l'électrolyte un additif de tétrachlorure d'acide aurique ($HAUCl_4$).

5. Cellule de mesure électrochimique selon l'une des revendications 1 à 4, caractérisée en ce qu'il est prévu une électrode de référence (9) supplémentaire faite du même métal que l'électrode de mesure (1).

6. Cellule de mesure électrochimique selon l'une des revendications 1 à 5, caractérisée en ce que la contre-électrode (2) est protégée au moyen d'une membrane d'échange de cations (11).

7. Cellule de mesure électrochimique selon la revendication 6, caractérisée en ce que la membrane d'échange d'ions (11) est en Nafion (PTFE perfluorosulfoné).

8. Cellule de mesure électrochimique selon la revendication 6 ou 7, caractérisée en ce que la membrane d'échange d'ions est serrée en tant que membrane de séparation (11) dans le boîtier (4), entre l'électrode de mesure (1) et la contre-électrode (2), dans la chambre d'électrolyte (3).

9. Cellule de mesure électrochimique selon la revendication 6 ou 7, caractérisée en ce que la membrane d'échange d'ions (11) recouvre la surface de la contre-électrode (2).